# EUROPÄISCHE PATENTSCHRIFT

(11) **EP 0 995 545 B1**
(45) Veröffentlichungstag und Bekanntmachung des Hinweises auf die Patenterteilung: **07.03.2007**
(21) Anmeldenummer: 99120380.3
(22) Anmeldetag: 13.10.1999
(51) Int. Cl.: G01B 11/02, B23Q 17/09, B23Q 17/22, B23Q 17/24

(54) **Vorrichtung zur Werkzeugvoreinstellung**
Device for presetting a tool
Appareil de preréglage d'un outil

(30) Priorität: 19.10.1998 DE 19848079
(43) Veröffentlichungstag der Anmeldung: 26.04.2000
(73) Patentinhaber: M&F Maschinen- und Fertigungsanlagen-Optimierung Josef Nagel, 66453 Reinheim (DE)
(72) Erfinder: Nagel, Josef, 66453 Reinheim (DE); Becker, Thomas, Dr.-Ing., 66806 Ensdorf (DE)
(74) Vertreter: Bernhardt, Winfrid

(56) Entgegenhaltungen:
- EP-A- 0 289 084
- DE-A- 3 743 717
- DE-A- 3 811 551
- DE-A- 3 905 949
- DE-A- 19 629 616
- DE-A- 19 632 148
- DE-B- 2 138 366
- DE-U- 8 601 152
- GB-A- 2 200 747
- US-A- 4 566 225
- US-A- 4 966 460

## Beschreibung

Die Erfindung betrifft eine durch Benutzung bekannte Vorrichtung gemäß dem Oberbegriff des Anspruchs 1 für die Vermessung eines in einer Werkzeugmaschine zu verwendenden Rotationswerkzeugs, insbesonderezerspanenden Rotationswerkzeug, im Rahmen einer Voreinstellung am Rotationswerkzeug vorgesehener Bearbeitungselemente, mit einem Werkzeughalter zur Halterung des Rotationswerkzeugs in einer vorgebenenen Anordnung relativ zu einer das Rotationswerkzeug abtastenden Längenmesseinrichtung zur Erfassung von Einstellpositionen der Bearbeitungselemente in bezug auf die Arbeitsdrehachse des Rotationswerkzeugs.

Es sind derartige Vorrichtungen zur Vermessung und Voreinstellung von Fräswerkzeugen bekannt, deren Werkzeughalter drehbar ist. Ein mit dem Werkzeughalter verbundenes, zu vermessendes und einzustellendes Werkzeug wird mit Hilfe des Werkzeughalters gedreht, wobei das Werkzeug durch die Längenmeßeinrichtung an seinem die Fräswerkzeugschneiden tragenden Umfang abgetastet wird. Die Längenmeßeinrichtung bestimmt die radiale Position der Schneiden, d.h. ihren Abstand von der Arbeitsdrehachse des Werkzeugs, wobei die Arbeitsdrehachse in einer vorgegebenen Position in bezug auf die Längenmeßeinrichtung angeordnet ist. Anstelle der Schneidenpositionen eines Fräswerkzeugs können mit Hilfe einer solchen Vorrichtung z.B. auch die Schneidenpositionen eines Bohrers vermessen werden.

Die US 4,966,460 beschreibt eine Rotationswerkzeuge verwendende Werkzeugmaschine mit einer Messeinrichtung, welche in die Spindel der Werkzeugmaschine eingespannte Rotationswerkzeuge mit einem Laserstrahl abtastet. Während der Abtastung dreht sich das eingespannte Rotationswerkzeug. Es wird der Schneiddurchmesser ermittelt, dessen Größe durch Abweichung der Arbeitsdrehachse des Rotationswerkzeugs von der Spindelachse und Fehleinstellungen von Bearbeitungselementen am Schneidwerkzeug beeinflusst sein kann.

Es ist die Aufgabe der Erfindung, eine neue Vorrichtung der eingangs erwähnten Art zu schaffen, die genauere Voreinstellungen von Rotationswerkzeugen zulässt.

Die diese Aufgabe lösende Vorrichtung nach der Erfindung gemäß Anspruch 1 ist gekennzeichnet, durch eine Einrichtung zur Korrektur des Fehlereinflusses von Abweichungen der tatsächlichen Position des Rotationswerkzeugs von der vorgegebenen Anordnung auf die Erfassung der Einstellposition, wobei die Korrektureinrichtung eine Katibriereinrichtung zur Vorermittlung und Speicherung von Abweichungen der Lage der Arbeitsdrehachse des Rotationswerkzeugs von der Lage, welche der vorgegebenen Anordnung des Rotationswerkzeugs entspricht, aufweist, und die Längenmesseinrichtung im Rahmen der Kalibrierung zur Abtastung von Tastpunkten an einem Kalibrierwerkzeug oder dem Werkzeughalter vorgesehen ist.

Durch diese Erfindungslösung lassen sich insbesondere durch Fertigungsungenauigkeiten des Werkzeughalters bedingte Abweichungen der Werkzeugposition von der vorgegebenen Anordnung korrigieren.

In einer Ausführungsform der Erfindung weist das Kalibrierwerkzeug vorgegebenen Einstellpositionen der Bearbeitungselemente entsprechende Tastpunkten für die Längenmessung auf.

Bei der Längenmeßeinrichtung handelt es sich vorzugsweise um eine optische Längenmeßeinrichtung mit einer Einrichtung zur Bildverarbeitung. Zum Beispiel umfaßt die Längenmeßeinrichtung eine elektronische Kamera oder/und einen Lasertriangulator.

In einer bevorzugten Ausführungsform der Erfindung ist das Bearbeitungswerkzeug ein Fräswerkzeug mit Schneiden als verstellbaren Bearbeitungselementen.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: eine schematische Darstellung wesentlicher Bestandteile einer Voreinstellvorrichtung nach der Erfindung,
- Fig. 2: ein einzustellendes Werkzeug in einer Draufsicht,
- Fig. 3: ein weiteres Ausführungsbeispiel für eine erfindungsgemäße Voreinstellvorrichtung in schematischer Darstellung,
- Fig. 4: eine die Voreinstellung mit Hilfe der Vorrichtungen von Fig. 1 bis 3 erläuternde Darstellung,
- Fig. 5: eine Fehlereinflüsse bei den Einstellvorrichtungen gemäß Fig. 1 bis 3 erläuternde Darstellung, und
- Fig. 6: eine die Kalibrierung der Einstellvorrichtung von Fig. 1 erläuternde Darstellung.

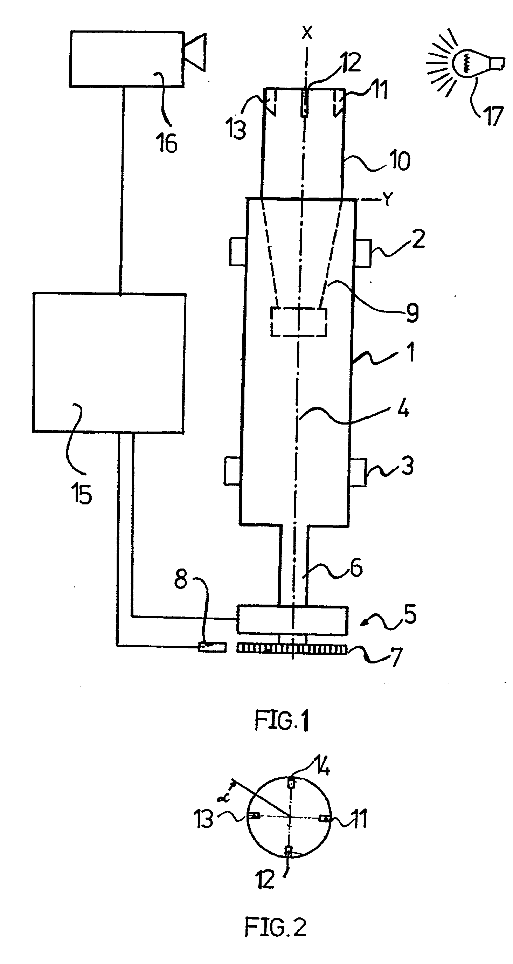

Mit dem Bezugszeichen 1 ist in Fig. 1 ein Werkzeughalter einer Werkzeugvoreinstellvorrichtung bezeichnet, der über Lager 2 und 3 um eine Achse 4 drehbar an nicht dargestellten Vorrichtungsteilen gelagert ist.

Zur Drehung des Werkzeughalters 1 dient ein Drehantrieb 5. Eine Antriebswelle 6 des Drehantriebs 5 ist mit einer Drehscheibe 7 verbunden, die am Umfangsrand eine durch einen Sensor erfaßbare Teilung aufweist. Im vorliegenden Ausführungsbeispiel wird durch einen Optiksensor 8 eine Strichteilung erfaßt.

Das Bezugszeichen 9 bezeichnet eine zu der Drehachse 4 koaxiale Stirnausnehmung des im vorliegenden Ausführungsbeispiels zylindrischen Werkzeughalters 1. In die konische Stirnausnehmung 8 ist ein Fräswerkzeug 10 mit einem konischen Endteil eingesetzt. Das Fräswerkzeug 10 weist vier im Winkelabstand von jeweils 90° zueinander angeordnete Schneiden 11 bis 14 auf. Die Schneiden 11 bis 14 sind in ihren Halterungen verstellbar, so daß die Schneidkanten in einem gewünschten Abstand zur Arbeitsdrehachse des Fräswerkzeugs 9 angeordnet werden können.

Die Arbeitsdrehachse des Fräswerkzeugs 10 fällt mit der Drehachse 4 des Werkzeughalters 1 zusammen, soweit sich bedingt durch Fertigungstoleranzen des Werkzeughalters eine geringfügige Lageabweichung dieser Drehachsen voneinander ergeben kann.

Der Optiksensor 8 steht mit einer einen Mikroprozessor umfassenden Auswert- und Steuereinrichtung 15 in Verbindung, über welche u.a. der Drehantrieb 5 ansteuerbar ist. An die Auswert- und Steuereinrichtung 15 ist ferner eine elektronische Kamera 16 angeschlossen, in deren Sichtfeld der die Schneiden 11 bis 14 aufweisende Endteil des Fräswerkzeugs 10 zur Anordnung kommt.

Mit 17 ist eine Beleuchtungseinrichtung zur Ausleuchtung des Fräswerkzeugs 10 bezeichnet, wobei die Kamera 16 das Meßobjekt im Gegenlicht erfaßt.

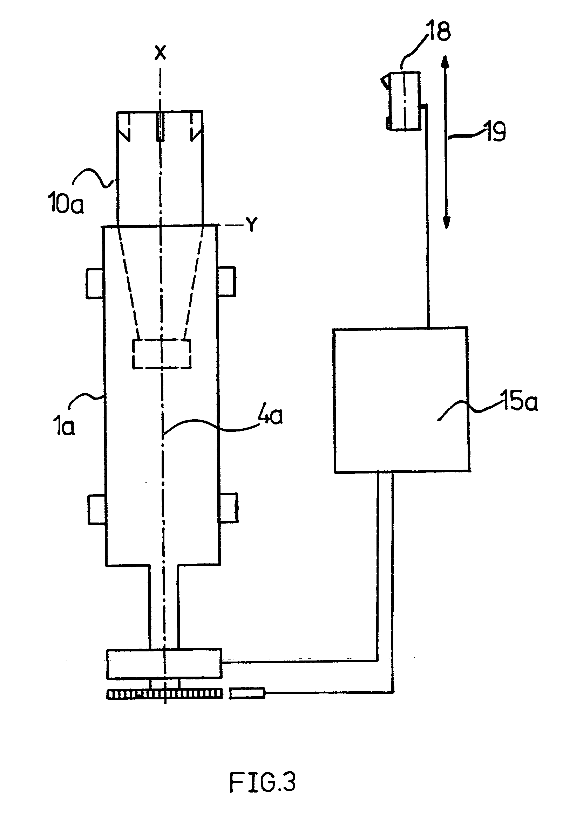

Das Ausführungsbeispiel von Fig. 3 unterscheidet sich von dem Ausführungsbeispiel von Fig. 1 und 2 lediglich darin, daß zur Längenmessung ein Lasertriangulator 18 eingesetzt wird, der entsprechend einem Doppelpfeil 19 parallel zu einer Drehachse 4a eines Werkzeughalters 1a verschiebbar ist.

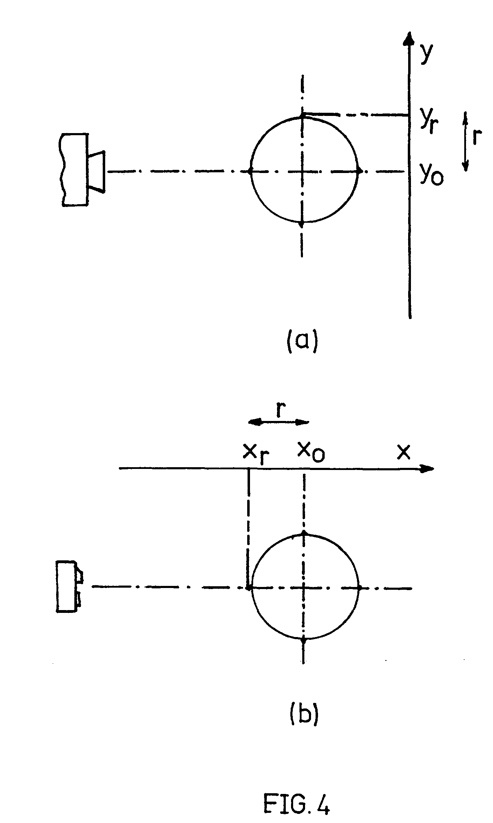

Die Auswert- und Steuereinrichtung 15 enthält ein zur Ermittlung von Längen geeignetes Bildverarbeitungsprogramm, dem, wie aus Fig. 4a hervorgeht, eine vorbestimmte Sollposition y₀ der Arbeitsdrehachse des Fräswerkzeugs 10 auf einer Y-Koordinate zugrundeliegt. Die Kamera 16 erfaßt eine Begrenzung des Meßobjekts in y-Richtung. Das Bildverarbeitungsprogramm ermittelt jeweils einen Koordinatenwert y_{r.} Der bei einer Voreinstellung des Fräswerkzeugs interessierende Radiusabstand r der Schneidkante von der Arbeitsdrehachse des Fräswerkzeugs ergibt sich dann durch Differenzbildung: r = yᵣ - yₒ.

Bei dem Ausführungsbeispiel von Fig. 3, bei dem eine Entfernungsmessung bis zur Schneidkante (oder einen angrenzenden Bereich des Werkzeugs) erfolgt, ergibt sich der Abstand aus: r = x₀ - xᵣ (siehe Fig. 4b).

Durch Fertigungsungenauigkeiten kann die Arbeitsdrehachse des Werkzeugs 15, 15a in ihrer Lage von der Drehachse 4, 4a des Werkzeughalters 1, 1a abweichen. Unter anderem bedingt durch Ungenauigkeiten der Lager des Werkzeughalters braucht auch die Zylinderachse des Werkzeughalters 1, 1a nicht mit dessen Drehachse zusammenzufallen. Insgesamt führen diese Abweichungen letztlich dazu, daß sich die Arbeitsdrehachse des mit dem Werkzeughalter mitgedrehten Werkzeugs um die Drehachse des Werkzeughalters bewegt. Je nach Drehwinkellage α des Werkzeughalters bzw. Werkzeugs verschiebt sich so die für die Bestimmung des Abstands r maßgebliche Arbeitsdrehachse des Werkzeugs 10, 10a um Δ x₀ (a) bzw. Δ y₀ (α) aus der Position x₀, y₀.

Zur automatischen Korrektur eines durch diese Verschiebung bewirkten Fehlers bei der Bestimmung von r ist vor der Benutzung der Voreinstellvorrichtung eine Kalibrierung unter Zuhilfenahme eines Kalibrierwerkzeugs mit bekannten Abständen ro der Schneidkanten von der Arbeitsdrehachse oder/und mit bekanntem Werkzeugdurchmesser durchzuführen.

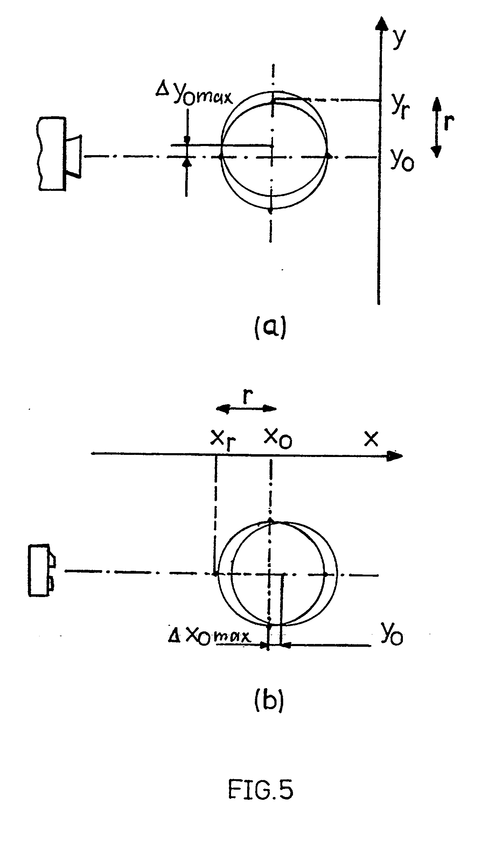

In Fig. 5 sind die in y- bzw. x-Richtung maximal auftretenden Verschiebungen Δ y₀ max, Δ x₀ max dargestellt. Die Verschiebungen schwanken in Abhängigkeit vom Cosinus bzw. Sinus der Drehwinkelposition α des Werkzeughalters zwischen diesen Maximalwerten und dem Wert 0, d.h. zwischen jedem Maximalwert und dem Wert 0 liegt ein Drehwinkel von 90°.

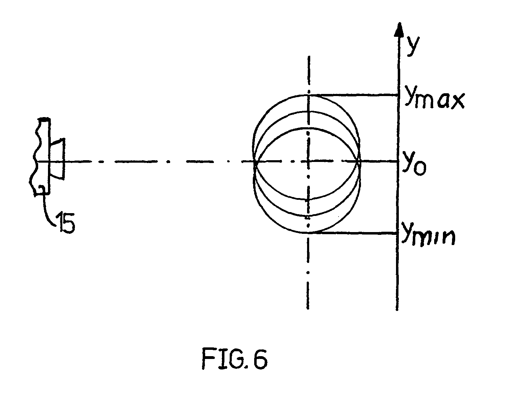

In einem ersten Kalibrierschritt wird die der Drehachse 4, 4a des Werkzeughalters 1, 1 a entsprechende Bezugsposition y₀ bzw. x₀ ermittelt, was nachfolgend anhand von Fig. 6, welche sich auf das Ausführungsbeispiel von Fig. 1 und 2 bezieht, erläutert wird.

Zur Bestimmung des Bezugswertes y₀ wird der Werkzeughalter gedreht, wobei die Maximalwerte der Auslenkung yₘₐₓ und yₘᵢₙ, zwischen denen ein Drehwinkel Δα von 180° liegt, bestimmt werden. Der der Drehachse des Werkzeughalters entsprechende Bezugswert y₀ ergibt sich dann: y₀ = (yₘₐₓ - yₘᵢₙ)/2.

Nachdem y₀ bestimmt worden ist, können in einer unter Ansteuerung des Antriebs 5 durch die Einrichtung 15 durchgeführten Kalibrierfahrt in Abhängigkeit von der Drehwinkelposition α des Werkzeughalters Korrekturwerte Δ y₀ in Abhängigkeit von der Drehwinkelposition α des Werkzeughalters ermittelt und gespeichert werden. Dazu werden zwischen dem Maximalwert yₘₐₓ und Null liegende Zwischenwerte yₘ in Abhängigkeit von α ermittelt. Der Korrekturwert Δ y₀ (α) ergibt sich dann: Δ y₀ (α) = yₘ (α) - y₀ - r₀.

Die so kalibrierte Vorrichtung kann beim Messen von Einstellwerten automatisch Korrekturen vornehmen, wobei die Auswert- und Steuereinrichtung den jeweiligen Drehpositionswinkel α des Werkzeughalters ermittelt und anhand der gespeicherten, den Drehwinkelpositionen α zugeordneten Korrekturwerten automatisch gemessene Einstellwerte korrigiert, so daß sie genau den Abständen der Schneidkanten von der Arbeitsdrehachse des Werkzeugs entsprechen.

Das einzustellende Werkzeug braucht in bezug auf den Werkzeughalter in keiner bestimmten Winkellage in den Werkzeughalter eingespannt zu werden. Maßgebend für die Korrektur ist allein die Drehwinkellage des Werkzeughalters.

Im Unterschied zu dem gezeigten Ausführungsbeispiel könnten Meßwerte zur Bestimmung von Korrekturwerten unterhalb der Schneidelemente, auch am Werkzeughalter, ermittelt werden. Das Kalibrierwerkzeug braucht selbst keine Schneidkanten wie das Werkzeug aufzuweisen. Es könnte lediglich durch eine Welle mit bekanntem Durchmesser gebildet sein.

## Patentansprüche

1. Vorrichtung für die Vermessung eines in einer Werkzeugmaschine zu verwendenden Rotationswerkzeugs, insbesondere zerspanenden Rotationswerkzeugs (10), im Rahmen einer Voreinstellung am Rotationswerkzeug (10) vorgesehener Bearbeitungselemente (11-14), mit einem Werkzeughalter (1) zur Halterung des Rotationswerkzeugs (10) in einer vorgegebenen Anordnung relativ zu einer das Rotationswerkzeug (10) abtastenden Längenmesseinrichtung (15,16;15a,18) zur Erfassung von Einstellpositionen der Bearbeitungselemente (11-14) in bezug auf die Arbeitsdrehachse des Rotationswerkzeugs (10),
**gekennzeichnet durch** eine Einrichtung zur Korrektur des Fehlereinflusses von Abweichungen der tatsächlichen Position des Rotationswerkzeugs (10) von der vorgegebenen Anordnung auf die Erfassung der Einstellpositionen, wobei die Korrektureinrichtung eine Kalibriereinrichtung zur Vorermittlung und Speicherung von Abweichungen der Lage der Arbeitsdrehachse des Rotationswerkzeugs (10) von der Lage, welche der vorgegebenen Anordnung des Rotationswerkzeugs entspricht, aufweist, und die Längenmesseinrichtung im Rahmen der Kalibrierung zur Abtastung von Tastpunkten an einem Kalibrierwerkzeug oder dem Werkzeughalter (1) vorgesehen ist.

2. Vorrichtung nach Anspruch 1,
**dadurch gekennzeichnet,**
**daß** das Kalibrierwerkzeug vorgegebenen Positionen der Bearbeitungselemente entsprechende Tastpunkte für die Längenmessung aufweist.

3. Vorrichtung nach Anspruch 1 oder 2,
**dadurch gekennzeichnet,**
**daß** die Längenmeßeinrichtung eine optische Längenmeßeinrichtung (15,16) mit einer Einrichtung zur Bildverarbeitung ist.

4. Vorrichtung nach einem der Ansprüche 1 bis 3,
**dadurch gekennzeichnet,**
**daß** die Längenmeßeinrichtung eine elektronische Kamera (16), eine Lasermeßeinrichtung (18) oder/und einen mechanischen Taster umfaßt.

5. Vorrichtung nach einem der Ansprüche 1 bis 4,
**dadurch gekennzeichnet,**
**daß** das Rotationswerkzeug ein Fräswerkzeug (10) mit Schneiden (11-14)als Bearbeitungselemente, ist.

6. Vorrichtung nach einem der Ansprüche 1 bis 5,
**dadurch gekennzeichnet,**
**daß** eine die Drehwinkellage α des Werkzeughalters (1) erfassende Einrichtung vorgesehen ist und die Kalibriereinrichtung Abweichungswerte in Zuordnung zur Drehwinkellage α des Werkzeughalters (1) ermittelt und speichert.

## Claims

1. Apparatus for measuring a rotary tool, in particular a rotary cutting tool (10), to be used in a machine tool, in the course of presetting cutting elements (11-14) provided on the rotary tool (10), comprising a tool holder (1) for holding the rotary tool (10) in a predetermined arrangement relative to a length-measuring device (15, 16; 15a, 18) which scans the rotary tool (10) and is intended for detecting setting positions of the cutting elements (11-14) with respect to the working rotation axis of the rotary tool (10), **characterized by** a device for correcting the error effect of deviations of the actual position of the rotary tool (10) from the predetermined arrangement on the detection of the setting positions, the correcting device having a calibrating device for predetermining and storing deviations of the position of the working rotation axis of the rotary tool (10) from the position which corresponds to the predetermined arrangement of the rotary tool, and the length-measuring device being provided in the course of the calibration for the scanning of scanning points on a calibrating tool or the tool holder (1).

2. Apparatus according to Claim 1, **characterized in that** the calibrating tool has scanning points, corresponding to predetermined positions of the machining elements, for the length measurement.

3. Apparatus according to Claim 1 or 2, **characterized in that** the length-measuring device is an optical length-measuring device (15, 16) having a device for image processing.

4. Apparatus according to one of Claims 1 to 3, **characterized in that** the length-measuring device comprises an electronic camera (16), a laser measuring device (18) or/and a mechanical probe.

5. Apparatus according to one of Claims 1 to 4, **characterized in that** the rotary tool is a milling tool (10) having cutting inserts (11-14) as cutting elements.

6. Apparatus according to one of Claims 1 to 5, **characterized in that** a device detecting the rotary angle position α of the tool holder (1) is provided, and the calibrating device determines and stores deviation values assigned to the rotary angle position α of the tool holder (1).

## Revendications

1. Dispositif pour le mesurage d'un outil rotatif à utiliser dans une machine-outil, en particulier un outil rotatif d'usinage (10) dans le cadre d'un préréglage d'éléments d'usinage (11-14) prévus sur l'outil rotatif (10), avec un support (1) à outil destiné à fixer l'outil rotatif (10) dans une disposition prédéfinie par rapport à un dispositif de mesure de la longueur (15, 16 ; 15a, 18) palpant l'outil rotatif (10) pour déterminer des différentes positions de réglage des éléments d'usinage (11-14) par rapport à l'axe rotatif de travail de l'outil rotatif (10), **caractérisé par** un dispositif pour la correction des influences d'erreur de déviation de la position réelle de l'outil rotatif (10) par rapport à la disposition prédéfinie sur la détermination des différentes positions de réglage, le dispositif de correction présentant un dispositif de calibrage pour la prédétermination et l'enregistrement des déviations de la position de l'axe rotatif de travail de l'outil rotatif (10) de la position qui correspond à la disposition prédéfinie de l'outil rotatif et le dispositif de mesure de la longueur étant prévu dans le cadre du calibrage pour palper des points de palpage sur un outil de calibrage ou le support (1) à outil.

2. Dispositif selon la revendication 1, **caractérisé en ce que** l'outil de calibrage présente des points de palpage pour la mesure de la longueur correspondant à des positions prédéfinies des éléments d'usinage.

3. Dispositif selon la revendication 1 ou 2, **caractérisé en ce que** le dispositif de mesure de la longueur est un dispositif de mesure optique de la longueur (15, 16) avec un dispositif pour le traitement d'images.

4. Dispositif selon l'une quelconque des revendications 1 à 3, **caractérisé en ce que** le dispositif de mesure de la longueur comprend une caméra électronique (16), un dispositif de mesure au laser (18) ou/et un palpeur mécanique.

5. Dispositif selon l'une quelconque des revendications 1 à 4, **caractérisé en ce que** l'outil rotatif est un outil de fraisage (10) avec des lames (11-14) comme éléments d'usinage.

6. Dispositif selon l'une quelconque des revendications 1 à 5, **caractérisé en ce qu'**on a prévu un dispositif enregistrant la position d'angle de rotation α du support (1) à outil et le dispositif de calibrage détermine et enregistre les valeurs de déviation par rapport à la position d'angle de rotation α du support (1) à outil.
